# EUROPÄISCHE PATENTSCHRIFT

(11) **EP 2 740 560 B1**
(45) Veröffentlichungstag und Bekanntmachung des Hinweises auf die Patenterteilung: **26.04.2017**
(21) Anmeldenummer: 13195995.9
(22) Anmeldetag: 06.12.2013
(51) Int. Cl.: B23K 20/04, B23K 20/227, B32B 15/01, C21D 8/02, F01N 3/28

(54) **Verfahren zur Herstellung einer walzplattierten Stahlfolie, und eine walzplattierte Stahlfolie**
Method for producing a roll clad steel foil, and a roll clad steel foil
Procédé de fabrication d'une feuille d'acier plaquée par laminage, et une feuille d'acier plaquée par laminage

(30) Priorität: 07.12.2012 DE 102012111953
(43) Veröffentlichungstag der Anmeldung: 11.06.2014
(73) Patentinhaber: MK Metallfolien GmbH, 58089 Hagen (DE)
(72) Erfinder: Cloppenburg, Gerd, 58509 Lüdenscheid (DE); Lan, Yun, 58119 Hagen (DE)
(74) Vertreter: Kalkoff & Partner

(56) Entgegenhaltungen:
- EP-A2- 0 846 521
- GB-A- 1 489 618
- US-A- 3 140 172
- US-A- 3 705 023

## Beschreibung

Die Erfindung betrifft ein Verfahren zur Herstellung einer walzplattierten Stahlfolie, sowie eine walzplattierte Stahlfolie gemäß dem Oberbegriff der Ansprüche 1 und 8 (siehe, z.B., EP0846521A2).

Derartige Folien finden beispielsweise Anwendung als Trägermaterial für Abgasnachbehandlungssysteme. Als Trägermaterial für solche Abgasnachbehandlungssysteme, wie beispielsweise Katalysatoren und Diesel- Partikelfilter, werden sowohl keramische als auch metallische Werkstoffe verwendet. Metallische Katalysatorträger heizen sich schneller auf und bieten darüber hinaus noch die Möglichkeit des elektrischen Vorheizens und der elektrostatischen Abscheidung von Nanopartikeln. Außerdem zeigen sie eine gute Temperaturbeständigkeit sowie eine höhere Konvertierungsleistung aufgrund der Turbulenzerzeugenden Strukturierung und stellen damit geringere Anforderungen an die Bauraumgröße gegenüber keramischen Systemen. Ein geringerer Abgasgegendruck ermöglicht darüber hinaus einen bei wirtschaftlicher Fahrweise geringeren Kraftstoffverbrauch.

Im Vergleich zu Keramik weisen metallische Katalysatorträger jedoch den Nachteil höherer Materialkosten auf. Üblicherweise werden Stahlfolien mit Dicken von 30-80µm aus FeCrAl-Legierungen als Trägermaterialien für metallische Automobilabgaskatalysatoren verwendet. Aufgrund der hohen Gehalte von Chrom von in der Regel 16-23 Gew.-% und Aluminium von 3-8 Gew.-% weisen diese ferritischen Stähle eine hohe Oxidationsbeständigkeit im Hochtemperaturbereich von 800-1200°C auf, die durch eine dichte, langsam wachsende Aluminiumoxidschicht (α-Al₂O₃), deren Haftung bzw. Wachstum durch zusätzliche reaktive Elemente (Ce, La, Y, Hf...) verbessert bzw. verlangsamt wird. Bei niedrigeren Temperaturen <800°C entstehen jedoch neben Aluminiumoxid (Al₂O₃) noch weitere Spinelle wie FeAl₂O₄ und FeCr₂O₄, die deutlich schlechtere Oxidations- und Korrosionsbeständigkeit als Al₂O₃ aufweisen. Außerdem findet im Temperaturbereich 400-600°C eine spröde Phasenbildung statt, die zur Verschlechterung der mechanischen Eigenschaften der Stähle führen kann.

Der Anwendungsbereich der Katalysatoren bzw. Partikelfilter für Verbrennungsmotoren wie z.B. Nutzfahrzeuge, LKW, stationäre und Offroad Motoren (Schiffsmotoren, etc. Baumaschinen, Landwirtschaft) liegt meistens bei Temperaturen kleiner als 800°C. Um die erforderlichen Emissionsgrenzwerte zu erreichen, fokussieren neue Entwicklungen auf zukünftige Partkelfilter und SCR- Systeme, wobei die Temperaturanforderung an das Trägermaterial meistens kleiner als 750°C ist.

Für derartige Anwendungen mit geringeren Temperaturanforderungen wie z.B. bei Nutzfahrzeugen, LKW und stationären Motoren, werden Legierungen mit reduzierten Gehalten von Chrom (10-20 Gew.-%) und Aluminium (2,5-4,3 Gew.-%) im Vergleich zum Standardwerkstoff (Werkstoff-Nr. 1.4767) genannt, wobei die Herstellungsverfahren auch anhand des konventionellen Gießens und der anschließenden Warm- und Kaltverformung wie beim Standardwerkstoff 1.4767 erfolgen. Die modifizierten Legierungen sind aufgrund der niedrigeren Legierungselemente zwar kostengünstiger als der Standardwerkstoff 1.4767, allerdings muss der Nachteil in Kauf genommen werden, dass die FeCrAl-Legierungen 1.4725 und 1.4767 durch das konventionelle Verfahren schwer herstellbar und mit hohen Ausfällen u.a. durch Versprödungserscheinungen beim Warmwalzen verbunden sind.

Zum Vermeiden der hohen Ausfälle beim konventionellen Herstellverfahren wurden in den letzten Jahren Altnativen entwickelt, bei welchen ein Cr- Stahl, der seltene Erdenelemente enthält, mit Aluminium oder Al- Legierungen beschichtet wird. Derartige Verbundwerkstoffe werden dann an Enddicken gewalzt und anschließend diffusionsgeglüht, wobei bei Einstellung geeigneter Glühparameter eine homogene Legierung entstehen soll.

Aus der EP0846521A2 ist ein Verfahren bekannt, bei dem ein ferritischer Chrom-Stahl, der seltene Erdenelemente enthält, beiderseitig mit Aluminium walzplattiert und anschließend bei 900-1200°C diffusionsgeglüht wird, wobei dadurch eine homogene FeCrAl- Legierung mit einem Cr-Gehalt von 18-22 Gew.- % und einem Al-Gehalt ≥ 5 Gew.-% und mit seltenen Erden entsteht. Anhand des gleichen Herstellverfahrens der Walzplattierung wird in der WO2005/014275A1 eine kostengünstige Legierung erzeugt, die einen reduzierten Gehalt von 9-18 Gew.- % Cr und 4-9 Gew.-% Al sowie keine seltene Enden aufweist und für Katalysator-Anwendungen bei Temperaturen < 800°C geeignet sein soll.

Ausgehend von dem voranstehend erläuterten Stand der Technik besteht die Aufgabe der Erfindung darin, eine kostengünstige beschichtete Folie herzustellen, die Legierungselemente in nur niedrigen Gehalten, z. B. Cr < 9 Gew.-% enthält, jedoch hohe Oxidations- und Korrosionsbeständigkeit bei Temperaturen bis zu 1100°C und einen selbstlötenden Effekt aufweist. Dadurch eignet sie sich insbesondere auch für die Verwendung von Verbrennungsmotoren als Trägermaterial für die Abgaskatalysatoren und Partikelfilter. Eine derart hergestellte walzplattierte Folie zeichnet sich dabei dadurch aus, dass diese direkt ihrem Verwendungszweck entsprechend eingesetzt werden kann, ohne dass es weiterer Nachbearbeitungen wie z.B. einer Diffusionswärmebehandlung bei Temperaturen von 900-1200°C über einen ausreichenden Zeitraum, wie in der EP0846521A2 und der WO2005/014275A1 erforderlich, bedarf.

Die Erfindung löst die Aufgabe durch ein Verfahren zur Herstellung einer walzplattierten Stahlfolie mit den Merkmalen des Anspruchs 1 sowie eine Stahlfolie mit den Merkmalen des Anspruchs 8. Vorteilhafte Weiterbildungen der Erfindung sind in der abhängigen Ansprüchen angegeben.

In dem erfindungsgemäßen Verfahren wird ein < 9 Gew.-% Chrom aufweisendes Stahlband mit einer Banddicke von bis zu 4 mm beidseitig durch Walzplattieren mit einer Schicht aus Aluminium oder einer Aluminiumlegierung mit einem Siliziumanteil von ≤ 2 Gew.-% beschichtet. Dabei ergibt sich ein Dickenverhältnis der erfindungsgemäß erzeugten Aluminium- oder der Aluminiumlegierungsschicht pro Seite bezogen auf die Gesamtfoliendicke von ≥6%. Anschließend wird das beschichtete Stahlband auf eine Dicke von 10-150 µm gewalzt.

Das erfindungsgemäße Verfahren ermöglicht die Herstellung von Folien, die in besonderer Weise als Trägermaterial für Katalysatoren und Partikelfilter von Verbrennungsmotoren geeignet sind. Die beschichtete Folie weist dabei aufgrund der dünnen Aluminiumoxidschicht auf der Oberfläche eine hohe Oxidations- und Korrosionsbeständigkeit im Hochtemperaturbereich auf, wobei eine dünne Schicht aus Fe-Al-intermetallischen Phasen eine gute Haftung zwischen den Auflagen und dem Kernmaterial gewährleistet. Aufgrund der Aluminiumoxidschicht auf den Oberflächen ist eine sofortige Wirkung gegen Oxidation bzw. Korrosion gegeben.

Vorteilhaft erfolgt das Walzplattieren mit einer Materialverformung von 50%-80%. Dabei werden bei Wahl von geeigneten Umformgraden die beiden Metallschichten mechanisch fest miteinander verbunden. Nach einer besonders vorteilhaften Weiterbildung der Erfindung wird das walzplattierte Stahlband geglüht, wobei die Glühparameter derart eingestellt werden, dass die sich die durch das Glühen ausbildende metallische Verbindungsschicht aus intermetallischen Eisen-Aluminium Phasen so dünn wie möglich gehalten wird. Diese in der Regel sehr harte metallische Verbindungsschicht gewährleistet eine gute Haftung zwischen dem Kernmaterial und den Auflagen und ermöglicht in ihrer nur sehr dünnen Ausführung dennoch eine gute Verformbarkeit des plattierten Stahlbands.

Grundsätzlich kann das beschichtete Stahlband anschließend direkt auf seine Endabmessungen gewalzt werden. Nach einer vorteilhaften Weiterbildung der Erfindung ist jedoch vorgesehen, dass das beschichtete Stahlband, ggf. mit Zwischenglühen, auf Zwischendicken gewalzt wird, wobei besonders vorteilhafterweise das Walzen durch Kaltwalzen erfolgt.

Das beschichtete und auf Zwischendicken gebrachte Stahlband kann ebenfalls grundsätzlich in einem beliebigen Walzprozess in seine Endabmessungen gebracht werden. Bevorzugt wird jedoch auch hier die Verformung durch Kaltwalzen erreicht. Nach einer bevorzugten Ausführungsform der Erfindung ist dabei ferner vorgesehen, dass das auf Zwischendicken gebrachte plattierte Stahlband vor dem Endwalzen weichgeglüht und ggf. mit Zwischenglühen auf die gewünschte Enddicke von 10-150 µm gewalzt wird.

Nach einer Weiterbildung des erfindungsgemäßen Verfahrens ist vorgesehen, dass die endgewalzte Folie vorzugsweise bei Temperaturen von 800-900°C weichgeglüht wird. Diese Ausgestaltung der Erfindung erlaubt auch die Herstellung kritischer Bauteile, da sich die Folie in besonders einfacher Weise in die vorgegebenen Formen bringen lässt.

Als Kernwerkstoff zum Walzplattieren kann ein Stahlband verwendet, das weiter bevorzugt aus legiertem Stahl mit einem Cr-Gehalt < 9 Gew.-% gebildet ist und der eine gute Verformbarkeit aufweist.

Nach einer besonders vorteilhaften Weiterbildung der Erfindung ist der Kernwerkstoff frei von seltenen Erden.

Als Beschichtungsmaterial für das erfindungsgemäße Verfahren kann Aluminium oder eine beliebige Aluminiumlegierung gewählt werden, wobei deren Siliziumgehalt jeweils kleiner gleich 2 Gew.-% ist. In einer bevorzugten Ausführungsform erfolgt das Walzplattieren mit einer Aluminiumlegierung aufweisend 0,6-1,0 Gew.-% Silizium, ≤ 0,5 Gew.-% Eisen sowie ≤ 0,02 Gew.-% Kupfer. Die hierdurch herstellbare Folie zeichnet sich in besonderer Weise dadurch aus, direkt als Trägermaterial für Abgaskatalysatoren und Partikelfilter verwendet werden zu können und ein Diffusionsglühen nicht notwendig ist.

Nachfolgend wird an einem Ausführungsbeispiel das erfindungsgemäße Verfahren zur Herstellung einer walzplattierten Stahlfolie sowie die mechanischen Eigenschaften und die Oxidationsbeständigkeit zweier beispielhaft mit dem erfindungsgemäß hergestellten walzplattierten Stahlfolien im Vergleich zu zwei nicht gemäß der Erfindung hergestellten Folien dargestellt. Dabei besteht der Unterschied hauptsächlich in unterschiedlichen Dicken der Aluminiumauflagen, die insbesondere für die Oxidationsbeständigkeit der Folie eine entscheidende Rolle spielt.

In Tabelle 1 werden die chemische Zusammensetzung der für das Walzplattieren eingesetzten Stahlbänder sowie der zum Plattieren eingesetzten Aluminiumlegierung für das gewählte Ausführungsbeispiel dargestellt.

**Tab.1 Chemische Zusammensetzung der im Ausführungsbeispiel gewählten Werkstoffe (Gew.-%)**

| Werkstoff | C | Si | Mn | P | S | Cr | Fe |
|---|---|---|---|---|---|---|---|
| Stahlband | 0,003 | 0,01 | 0,22-0,29 | 0,01 | 0,01 | 0,025 | Rest |
| Al-Auflagen | Si=0,85%; Cu=0,008%; Fe=0,27%; Rest Al | | | | | | |

Im dargestellten Ausführungsbeispiel wurden Stahlbänder mit Dicken von 1,4-2,5mm beidseitig mit Al-Auflagen in konventionellen Verfahren walzplattiert. Dabei wurden 4 verschiedene Proben mit unterschiedlichen Dickenverhältnissen von 5%, 7%, 12,5% und 17% der Aluminiumauflage pro Seite bezogen auf die Gesamtfoliendicke hergestellt. Das Walzplattieren erfolgte mit einem Verformungsgrad von 60-75%. Mittels Standardfertigung wurden die 4 Varianten kaltgewalzt und geglüht, wobei die 7%-Variante zweimal geglüht und die 5%-, 12,5%- sowie 17%-Variante jeweils einmal geglüht wurden. Die mechanischen Eigenschaften der dadurch entstandenen Stahlbleche sind in Tabelle 2 aufgelistet.

**Tab.2 Mechanische Eigenschaften der im Ausführungsbeispiel walzplattierten Stahlbleche**

| Probe | Blechdicke mm | Al-Dicke* /Seite, % | Streckgrenze Rpo,2, MPa | Festigkeit Rm, MPa | Dehnung A80, % |
|---|---|---|---|---|---|
| WPL₁ | 0,3 | 5 | 214 | 319 | 31 |
| WPL₂ | 0,15 | 7 | 239 | 314 | 33 |
| WPL₃ | 0,4 | 12,5 | 202 | 283 | 33 |
| WPL₄ | 0,3 | 17 | 178 | 253 | 34 |

| | | | | | |
|---|---|---|---|---|---|
| *Al-Dickenverhältnis: Schichtdicke pro Seite / Gesamtblechdicke in % | | | | | |

Die walzplattierten Stahlbleche WPL1, WPL2, WPL3 und WPL4 des Ausführungsbeispiels wurden weiter auf Dicken von 50 und 40 µm gewalzt, wobei WPL4 sowohl direkt gewalzt als auch zuvor auf eine Zwischendicke 0,1 mm gewalzt und geglüht wurde. Aus den Walzversuchen wurden zwei Vergleichsproben PV1-WPL1 und PV2-WPL1 sowie zwei erfindungsgemäße Proben PE1-WPL3 und PE2-WPL4 abgeteilt. Die entsprechenden mechanischen Eigenschaften werden in Tabelle 3 dargestellt.

**Tab.3 Mechanische Eigenschaften der im Ausführungsbeispiel walzplattierten Folien**

| Probe | Foliendicke mm | Al-Dicke* /Seite, % | Festigkeit Rm, MPa | Dehnung A80, % |
|---|---|---|---|---|
| PV1-WPL₁ | 0,05 | 5 | 750 | 0,18 |
| PV2-WPL₂ | 0,05 | 7 | 653 | 0,08 |
| PE1-WPL₃ | 0,05 | 12,5 | 724 | 0,06 |
| PE2-WPL₄ | 0,05 | 17 | 586 | 0,08 |

| | | | | |
|---|---|---|---|---|
| *Al-Dickenverhältnis: Schichtdicke pro Seite / Gesamtfoliendicke in % | | | | |

Zur Überprüfung der Oxidationsbeständigkeit wurden die im Ausführungsbeispiel hergestellten Folien an Luft bis zu 400 Stunden verschiedenen Temperaturen im Temperaturbereich von 750-1100°C ausgesetzt. Dabei erweisen sich die erfindungsgemäß hergestellten Proben PE1-WPL3 mit einem Dickenverhältnis von 12,5% Aluminium bezogen auf die Gesamtfoliendicke bis 970°C und PE2-WPL4 mit einem Dickenverhältnis von 17% Aluminium bezogen auf die Gesamtfoliendicke bis 1060°C oxidationsbeständig. Die Vergleichsproben PV1-WPL1 und PV2-WPL2 mit einem Dickenverhältnis von ≤ 7% Aluminium bezogen auf die Gesamtfoliendicke haben bei den Testtemperaturen versagt. Die entsprechenden Ergebnisse werden in Tabelle 4 wiedergegeben.

**Tab.4 Oxidationsbeständigkeit der im Ausführungsbeispiel walzplattierten Folien**

| Probe | Foliendicke mm | Al-Dicke /Seite, % | 900°C / 400h / Luft | 1000°C / 400h / Luft |
|---|---|---|---|---|
| PV1-WPL₁ | 0,05 / 0,04 | 5 | nicht beständig | nicht beständig |
| PV2-WPL₂ | 0,05 / 0,04 | 7 | nicht beständig | nicht beständig |
| PE1-WPL₃ | 0,05 / 0,04 | 12,5 | beständig | nicht beständig |
| PE2-WPL₄ | 0,05 / 0,04 | 17 | beständig | beständig |

Die erfindungsgemäß hergestellten Proben PE1-WPL3 und PE2-WPL4 wurden weiter bei Enddicken weichgeglüht. Dadurch wurde eine zusätzliche Verbesserung der Verformbarkeit erreicht und dies ist für die Bauteile mit komplizierter Strukturierung besonders geeignet.

Weitere Lötversuche wurden an Bauteilen aus den erfindungsgemäß hergestellten Folien durchgeführt. Ein selbstlötender Effekt wurde durch die Lötversuche bei Temperaturen von 500- 1000°C und einer Dauer < 3h unter Schutzgas festgestellt.

Die im Ausführungsbeispiel erfindungsgemäß hergestellten Folien zeichnen sich insbesondere dadurch vorteilhaft aus, dass ihr Kernmaterial aus einem legierten Stahl mit einem Cr-Gehalt < 9 Gew.-%, der zudem frei von seltenen Erdenelementen ist, gebildet werden. Ferner ist positiv aufzuführen, dass eine zusätzliche Diffusionswärmebehandlung insbesondere bei Temperaturen von 900-1200°C über einen ausreichenden Zeitraum der erfindungsgemäß hergestellten plattierten Folien für eine Hochtemperaturanwendung bei Temperaturen bis zu 1100°C z. B. als Trägermaterial für Anwendungen der Abgasnachbehandlungssysteme, insbesondere Katalysator und Partikelfilter für alle On- und Non-Road-Dieselverbrennungsmotoren nicht notwendig ist. Weiterhin weisen die erfindungsgemäß hergestellten Folien einen selbstlötenden Effekt bei einer geeigneten Wärmebehandlung der Bauteile auf.

## Patentansprüche

1. Verfahren zur Herstellung einer walzplattierten Stahlfolie **dadurch gekennzeichnet, dass**
- ein eine Banddicke von bis zu 4 mm aufweisendes Stahlband mit einem Chromgehalt < 9 Gew.-% beidseitig derart durch Walzplattieren mit einer Schicht aus Aluminium oder einer Aluminiumlegierung mit einem Siliziumanteil von ≤ 2 Gew.-% beschichtet wird, dass das Dickenverhältnis der Aluminium- oder der Aluminiumlegierungsschicht pro Seite zur Gesamtdicke ≥6% beträgt und
- das beschichtete Stahlband anschließend auf eine Dicke von 10-150 µm gewalzt wird wobei das beschichtete Stahlband auf Zwischendicken gewalzt und dann endgewalzt wird, wobei das auf Zwischendicken gewalzte, beschichtete Stahlband vor dem Endwalzen zwischengeglüht wird.

2. Verfahren nach Anspruch 1 **dadurch gekennzeichnet, dass** das Walzplattieren mit einer Verformung von 50%-80% erfolgt.

3. Verfahren nach Anspruch 1 **dadurch gekennzeichnet, dass** das beschichtete Stahlband nach dem Walzplattieren weichgeglüht wird.

4. Verfahren nach einem der vorhergehenden Ansprüche **dadurch gekennzeichnet, dass** das beschichtete und gewalzte Stahlband anschließend weichgegelüht, bevorzugt bei einer Temperatur von 700-900°C für eine Zeitdauer von < 30 min weichgeglüht wird.

5. Verfahren nach einem der vorhergehenden Ansprüche **dadurch gekennzeichnet, dass** der Kernwerkstoff, aus dem *das legierte_*Stahlband gebildet ist, frei von seltenen Erdenelementen ist.

6. Verfahren nach einem der vorhergehenden Ansprüche **dadurch gekennzeichnet, dass** der Kernwerkstoff folgende chemische Zusammensetzung aufweist:
| | |
|---|---|
| C: | ≤ 0,03 Gew.-% |
| Si: | ≤ 1,0 Gew.-% |
| Mn: | ≤ 1,0 Gew.-% |
| P: | ≤ 0,04 Gew.-% |
| S: | ≤ 0,02 Gew.-% |
| Cr: | < 9 Gew.-% |
| Ti: | ≤ 0,65 Gew.-% |
| Nb: | ≤ 0,8 Gew.-% |
sowie einem Rest Eisen mit den üblichen Verunreinigungen bis auf eine Menge von 100 Gew.-%.

7. Verfahren nach einem der vorhergehenden Ansprüche **dadurch gekennzeichnet, dass** die Schicht aus einer Aluminium-Legierung erzeugt sind, die folgende chemische Zusammensetzung aufweist:
Si: 0,6-1,0 Gew.-%
Fe: ≤ 0,5 Gew.-%;
Cu: ≤ 0,02 Gew.-%

8. Walzplattierte Stahlfolie, vorzugsweise hergestellt nach einem Verfahren gemäß einem der vorhergehenden Ansprüche, **gekennzeichnet durch**
- eine legierte, beidseitig mit einer Auflage aus Aluminium oder einer Aluminiumlegierung mit einem Siliziumanteil von ≤ 2% beschichtete Stahlfolie, wobei ein Dickenverhältnis der der Aluminium- oder der Aluminiumlegierungsauflage pro Seite zur Gesamtfoliendicke von ≥ 6% gegeben ist und wobei
- die beschichtete Stahlfolie mit einem Cr-Gehalt < 9 Gew.-% frei von seltenen Erden ist und eine Dicke von 10-150 µm aufweist.

9. Stahlfolie nach Anspruch 8, **dadurch gekennzeichnet dass** die Schicht aus Aluminium oder einer Aluminiumlegierung durch Walzplattieren auf das Stahlband aufgebracht ist.

10. Stahlfolie nach Anspruch 8 oder 9, **dadurch gekennzeichnet, dass** diese einen selbstlötenden Effekt bei einer Wärmebehandlung der Bauteile aufweist, wobei die Wärmebehandlung unter Temperatur ≤ 1000°C und Glühdauer < 3 Stunden sowie unter Schutzgas durchgeführt wird.

## Claims

1. A method for producing a roll clad steel foil, **characterized in that**
- a steel band having a band thickness of up to 4 mm with a chrome content of < 9 wt.-% is coated on both sides through roll cladding with a layer made of aluminum or an aluminum alloy with a silicon content of ≤ 2 wt.-% such that the thickness ratio of the aluminum or the aluminum alloy layer per side to the overall thickness is ≥ 6% and
- the coated steel band is subsequently rolled to a thickness of 10-150 µm
wherein the coated steel band is rolled to intermediate thicknesses and then finally rolled, wherein the coated steel band rolled to intermediate thicknesses is intermediately annealed before the final rolling.

2. The method according to claim 1, **characterized in that** the roll cladding takes place with a deformation of 50%-80%.

3. The method according to claim 1, **characterized in that** the coated steel band is soft-annealed after the roll cladding.

4. The method according to one of the preceding claims, **characterized in that** the coated and rolled steel band is subsequently soft-annealed, preferably soft-annealed at a temperature of 700-900°C for a duration of < 30 min.

5. The method according to one of the preceding claims, **characterized in that** the core material, from which the alloyed steel band is formed, is free of rare earth elements.

6. The method according to one of the preceding claims, **characterized in that** the core material has the following chemical composition:
| | |
|---|---|
| C: | ≤ 0.03 wt.-% |
| Si: | ≤ 1.0 wt.-% |
| Mn: | ≤ 1.0wt.-% |
| P: | ≤ 0.04 wt.-% |
| S: | ≤ 0.02 wt.-% |
| Cr: | < 9 wt.-% |
| Ti: | ≤ 0.65 wt.-% |
| Nb: | ≤ 0.8 wt.-% |
as well as a remainder of iron with the usual impurities up to a quantity of 100 wt.-%.

7. The method according to one of the preceding claims, **characterized in that** the layer is made of an aluminum alloy, which has the following chemical composition:
| | |
|---|---|
| Si: | 0.6-1.0 wt.-% |
| Fe: | ≤ 0.5 wt.-% |
| Cu: | ≤ 0.02 wt.-% |

8. A roll clad steel foil, preferably produced according to a method according to one of the preceding claims, **characterized by**
- an alloyed steel foil coated on both sides with a plating made of aluminum or an aluminum alloy with a silicon content of ≤ 2%, wherein a thickness ratio of the aluminum or the aluminum alloy plating per side to the total foil thickness of ≥ 6 wt.-% is given and wherein
- the coated steel foil with a Cr content < 9 wt.-% is free of rare earths and has a thickness of 10-150 µm.

9. The steel foil according to claim 8, **characterized in that** the layer made of aluminum or an aluminum alloy is applied to the steel band through roll cladding.

10. The steel foil according to claim 8 or 9, **characterized in that** it has an autogeneous soldering effect in the case of a heat treatment of the components, wherein the heat treatment is performed at a temperature ≤ 1000°C and for an annealing duration < 3 hours as well as under inert gas.

## Revendications

1. Procédé pour la fabrication d'une feuille d'acier plaquée par laminage, **caractérisé en ce que**
- une bande en acier d'une épaisseur de bande allant jusqu'à 4 mm, avec une teneur en chrome < 9% en poids, est revêtue sur les deux faces par plaquage par laminage avec une couche d'aluminium ou d'un alliage d'aluminium avec une teneur en silice ≤ 2% en poids, de telle façon que le rapport d'épaisseur de la couche d'aluminium ou d'un alliage d'aluminium sur chaque face représente ≥ 6% de l'épaisseur totale, et
- la bande en acier revêtue est ensuite laminée à une épaisseur de 10 à 150 µm,
dans lequel la bande en acier revêtue est laminée à des épaisseurs intermédiaires puis soumise à un laminage final, la bande en acier revêtue laminée à des épaisseurs intermédiaires étant soumise à un recuit intermédiaire avant le laminage final.

2. Procédé selon la revendication 1, **caractérisé en ce que** le plaquage par laminage est réalisé avec une déformation de 50% à 80%.

3. Procédé selon la revendication 1, **caractérisé en ce que** la bande en acier revêtue est soumise à un recuit d'adoucissement suite au plaquage par laminage.

4. Procédé selon l'une des revendications précédentes, **caractérisé en ce que** la bande en acier revêtue et laminée est ensuite soumise à un recuit d'adoucissement, de préférence à un recuit d'adoucissement à une température de 700 à 900°C, pour une durée < 30 minutes.

5. Procédé selon l'une des revendications précédentes, **caractérisé en ce que** le matériau de base constituant la bande en acier allié est exempt d'éléments de terres rares.

6. Procédé selon l'une des revendications précédentes, **caractérisé en ce que** le matériau de base présente la composition chimique suivante :
| | |
|---|---|
| C : | ≤ 0,03% en poids |
| Si : | ≤ 1,0% en poids |
| Mn : | ≤ 1,0% en poids |
| P : | ≤ 0,04% en poids |
| S : | ≤ 0,02% en poids |
| Cr : | < 9% en poids |
| Ti : | ≤ 0,65% en poids |
| Nb : | ≤ 0,8% en poids |
ainsi qu'un reste de fer avec les impuretés habituelles, jusqu'à une quantité de 100% en poids.

7. Procédé selon l'une des revendications précédentes, **caractérisé en ce que** la couche est constituée d'un alliage d'aluminium présentant la composition chimique suivante :
| | |
|---|---|
| Si : | 0,6-1,0% en poids |
| Fe : | ≤ 0,5% en poids |
| Cu : | ≤ 0,02% en poids |

8. Feuille d'acier plaquée par laminage, réalisée de préférence conformément à un procédé selon l'une des revendications précédentes, **caractérisée par**
- une feuille d'acier allié, revêtue sur les deux faces avec un revêtement en aluminium ou en un alliage d'aluminium avec une teneur en silice ≤ 2%, dans laquelle le rapport d'épaisseur du revêtement en aluminium ou en alliage d'aluminium sur chaque face représente ≥ 6% de l'épaisseur totale de la feuille, et dans laquelle
- la feuille d'acier revêtue avec une teneur en Cr < 9% en poids est exempte de terres rares et présente une épaisseur de 10 à 150 µm.

9. Feuille d'acier selon la revendication 8,
**caractérisée en ce que** la couche d'aluminium ou d'un alliage d'aluminium est appliquée sur la bande en acier par plaquage par laminage.

10. Feuille d'acier selon la revendication 8 ou 9,
**caractérisée en ce que** celle-ci présente un effet de soudure automatique lors d'un traitement thermique des composants, le traitement thermique étant réalisé à une température ≤ 1000°C et pour une durée de recuit < 3 heures, ainsi qu'avec un gaz protecteur.
